Europäisches Patentamt

European Patent Office

Office européen des brevets

(11) Veröffentlichungsnummer: **0 440 323 A2**

## (12) EUROPÄISCHE PATENTANMELDUNG

(21) Anmeldenummer: 91250025.3

(22) Anmeldetag: 30.01.91

(51) Int. Cl.5: **C04B 38/06**

(30) Priorität: 02.02.90 DE 4003599

(43) Veröffentlichungstag der Anmeldung:
07.08.91 Patentblatt 91/32

(84) Benannte Vertragsstaaten:
CH DE FR GB IT LI

(71) Anmelder: **Dr. C. Otto Feuerfest GmbH**
**Dr.-C.-Otto-Strasse 222**
**W-4630 Bochum 5(DE)**

(72) Erfinder: **Hermanski, Werner**
**Franz-Ludwig-Strasse**
**W-8600 Bamberg(DE)**
Erfinder: **Koschlig, Hans-Joachim, Dr.**
**Am Schamberge 10 b**
**W-4630 Bochum 5(DE)**
Erfinder: **Kimiai, Holger**
**Leidenfroststrasse 6**
**W-4100 Duisburg(DE)**
Erfinder: **Kunkel, Willi**
**Am Sattelgut 12**
**W-4630 Bochum 5(DE)**

(74) Vertreter: **Kaiser, Henning**
**c/o Preussag AG, Patente und Lizenzen,**
**Postfach 15 12 27 Kurfürstendamm 32**
**W-1000 Berlin 15(DE)**

(54) **Verfahren zur Herstellung eines keramischen Schaumkörpers mit Ausnehmungen oder Durchgangskanälen.**

(57) Für das Herstellen von keramischen Schaumkörpern, die an ihrem Umfang oder in Form von Sacklöchern Ausnehmungen aufweisen oder die mit Durchgangskanälen versehen sind, soll eine gleichmäßige Verteilung eines keramischen Imprägniermittels zum gleichmäßigen Beschichten des Schaumstoffgerüstes erreicht werden. Dazu werden die Schaumstoffteile mit den Ausnehmungen und/oder Kanälen des herzustellenden Schaumkörpers erzeugt, diese Ausnehmungen und Kanäle vorzugsweise wieder mit den abgetrennten Schaumstoffelementen gefüllt, das so präparierte Schaumstoffteil mit Imprägniermittel beschichtet und die Elemente der Ausnehmungen vor dem Trocknen von dem Schaumstoffteil wieder entfernt.

EP 0 440 323 A2

# VERFAHREN ZUR HERSTELLUNG EINES KERAMISCHEN SCHAUMKÖRPERS MIT AUSNEHMUNGEN ODER DURCHGANGSKANÄLEN

Die Erfindung bezieht sich auf ein Verfahren zum Herstellen eines keramischen Schaumkörpers mit Ausnehmungen oder Durchgangskanälen.

In DE 28 05 611 C2 wird die Herstellung eines keramischen Schaumstoffes mit gleichmäßiger Struktur und vorbestimmter Durchlässigkeit beschrieben. Dabei wird ein aus organischem, polymeren Kunststoff bestehender Schaumstoff wie Polyurethan mit einer wässrigen Aufschlämmung getränkt. Die Verteilung der Aufschlämmung in dem Schaumstoff wird durch mehrfaches Zusammendrücken auf 50 bis 90% seiner ursprünglichen Dikke in mehreren Spalten zwischen je zwei Walzen erreicht. Der Schaumstoff richtet sich nach dieser Behandlung auf etwa seine ursprüngliche Form wieder auf, wobei der Schaumkunststoff mit dem keramischen Material durch und durch beschichtet bleibt. Der Schaumstoffkörper wird getrocknet und anschließend unter Zersetzung des organischen Kunststoffes zu einem schaumartigen keramischen Körper gebrannt.

Hier wird auch eine Vorrichtung gezeigt, bei der die wässrige Aufschlämmung über eine Walze und eine Oberfläche oder wenigstens über eine Oberfläche in den ersten Walzenspalt gegossen wird, wobei sich vor der ersten oberen Walze des horizontal oder in geneigter Richtung zugeführten Schaumstoffes ein gewisser Vorrat bildet. Üblicherweise haben so hergestellte keramische Schaumstoffkörper einen rechteckigen Querschnitt. Eine gleichmäßige Verteilung, z. B. einer wässrigen Aufschlämmung in dem Schaumstoff kann jedoch nicht erreicht werden, wenn der Querschnitt des Schaumstoffes Ausnehmungen oder Durchgangskanäle aufweist. Ferner besteht durch Hohlräume im Schaumstoffkörper das Problem, daß sich der Querschnitt des Schaumstoffes beim Trocknen unerwünscht verändert, weil das Gewicht des mit Aufschlämmung beladenen Schaumkörpers von dem verbleibenden Stützgerüst nicht mehr voll getragen werden kann.

Es ist daher die Aufgabe der Erfindung, ein Verfahren zu schaffen, nach dem auch in Schaumstoffteilen, die an ihrem Umfang oder in Form von Sacklöchern Ausnehmungen aufweisen oder die mit Durchgangskanälen versehen sind, eine gleichmäßige Verteilung eines keramischen Imprägniermittels in dem Schaumstoff und damit auch eine gleichmäßige Struktur der fertigen keramischen Schaumkörper sowie auch deren Maßhaltigkeit erreicht werden kann.

Diese Aufgabe wird mit dem in Anspruch 1 angegebenen Verfahren erreicht. Die Unteransprüche geben bevorzugte Weiterbildungen der Erfindung an.

Aus einem Stück des Schaumstoffmaterials wird das Schaumstoffteil mit etwa den Abmessungen des herzustellenden Schaumkörpers abgetrennt. Die Formung des äußeren Umrisses kann, soweit er von einem Rechteck abweicht, durch Schneiden beispielsweise mit einer Bandsäge oder einem Bandmesser ausgeschnitten werden.

Kreisrunde Bohrungen für Durchgangskanäle werden mit z. B. einem hohlzylindrischen Bohrer ausgeschnitten. Soweit Umriß oder Kanäle über die ganze Länge des Schaumstoffteiles gleich bleiben, ist es auch möglich, die gewünschte Form auszustanzen. Die Herstellung von Sacklöchern und von Ausnehmungen am Umfang, die nicht über die ganze Länge verlaufen, kann beispielsweise mittels Fräsen erfolgen.

Erfindungsgemäß wird das ausgeschnittene Schaumstoffteil zusammen mit den abgetrennten Schaumstoffelementen mit keramischen Imprägniermittel gefüllt und zur gleichmäßigen Verteilung beispielsweise zwischen Walzen durchgewalkt, so daß die Stege des Schaumstoffes gleichmäßig und ausreichend mit Imprägniermittel beschichtet werden. Danach werden die abgetrennten Elemente entfernt und das Schaumstoffteil wird in der Form getrocknet, die dem späteren keramischen Schaumkörper entspricht, nachdem der organische Kunststoff während des Brennens entwichen ist. Das Belassen der ab- und ausgetrennten Elemente an dem Schaumstoff während dessen Imprägnierung führt zu einer gleichmäßigen Verteilung des Imprägniermittels im gesamten Querschnitt des behandelten Schaumstoffes, so daß auch der spätere keramische Schaumkörper eine gleichförmige Porenstruktur in allen seinen Teilen aufweist.

Der Schaumkörper erhält seine endgültige Form im wesentlichen während des Trocknungsvorganges. Durch die Beladung des Schaumes mit dem Imprägniermittel kann besonders bei mit ihrem Querschnitt von der rechteckigen Form abweichenden Schaumkörpern vor und während des Trocknens eine Verformung eintreten. Dabei können kreisrunde Durchgänge sich zu mehr oder weniger ovalen zusammendrücken, und auch der Abstand zwischen zwei Bohrungen oder sonstige kritische Abmessungen können sich unerwünscht verändern. Um dieses zu verhindern und zu gewährleisten, daß z. B. bei unregelmäßigem Querschnitt reproduzierbare, zu vernachlässigende Toleranzen zu erzielen sind, werden die Schaumstoffteile während des Trocknens an ihren maßhaltig herzustellenden Flächen, insbesondere der Ausnehmungen und Kanäle abgestützt. So trocknen beispielsweise Teile, welche vier parallele Kanäle enthalten, auf einem Gestell, das vier den Kanalabmessungen entsprechende Stangen besitzt, auf die das Teil aufgeschoben wird. Zusätzlich können Formkörper jedweder Geometrie, die entweder auf dafür vorgesehenen Unterlagen liegen oder an Stangen in Durchführungen aufgehängt sind, während des Trockenvorganges gewendet werden.

Wird eine Vorrichtung zum Imprägnieren der Schaumstoffteile verwendet, die mehrere Walzenspalte zum Befüllen des Schaumstoffs und zum anschließenden Verteilen desselben durch Zusammendrücken besitzt, ist vorgesehen, daß das Schaumstoffteil gemeinsam mit den abgetrennten Elementen alle Walzenspalte durchläuft. Hierdurch können komplizierte äußere Formen, die jedoch in der Längs- und Durchlaufrichtung der Schaumstoffteile gleich bleiben, in einer solchen Vorrichtung zwischen zylindrischen oder entsprechend profilierten Walzen bearbeitet werden. Die abgetrennten Schaumstoffteile können vorzugsweise so eingelegt werden, daß sie jeweils zwei zu imprägnierenden Teile verbinden, so daß diese Teile wie eine fortlaufende Bahn die Imprägniereinrichtung durchlaufen.

Ein Schaumstoffteil, das einen über seine Länge gleichen aber von einem Rechteck abweichenden äußeren Umriß und sich insbesondere in Längsrichtung erstreckende Kanäle aufweist, kann mit den vorher ausgetrennten, in die Kanäle eingesetzten Elementen in einem letzten Walzenspalt in einer Weise zusammengedrückt werden, bei der jeder Bereich des durch den Umriß bezeichneten Querschnitts um denselben prozentualen Anteil zusammengedrückt wird. Dies kann durch wenigstens eine profilierte Walze mindestens im letzten Walzenspalt erfolgen. Das insbesondere zur gleichmäßigen Verteilung des Imprägniermittels im Schaumstoff erfolgende Zusammendrücken zwischen Walzen kann im letzten Walzenspalt bis etwa 70 bis 90 % der ursprünglichen Dicke des unbehandelten Schaumstoffes betragen.

Insbesondere bei Schaumstoffteilen mit mehr als 100 mm Dicke ist es zweckmäßig, die Schaumstoffteile von oben in vertikaler Richtung in einen ersten Walzenspalt einzuführen und das Imprägniermittel von beiden Seiten über mit ihren Achsen horizontal angeordnete erste oder vorzugsweise zweite Walzenpaare zuzuführen und in den Schaumstoff einzuarbeiten.

Als Schaumstoff wird offenzelliger Polyurethanschaum auf Polyesterbasis bevorzugt. Die Porenzahl liegt vorzugsweise zwischen 5 und 20 Poren/cm. Porenzahl, Porengröße, Dichte des Schaumstoffes, Rückprall-Elastizität und etwaige weitere Eigenschaften können dem Verwendungszweck des keramischen Schaumkörpers angepaßt werden. Ebenso kann ein keramisches Imprägniermittel entsprechend der beabsichtigten Anwendung des Schaumkörpers ausgewählt werden.

Weitere Einzelheiten der Erfindung werden anhand der auf den beigefügten Zeichnungen schematisch dargestellten Ausführungsbeispiele beschrieben.

Es zeigen

Fig. 1 die Ansicht auf ein annähernd dreieckiges Schaumstoffteil mit einem dreieckigen Kanal,

Fig. 2 ein etwa ovales Teil mit vier Kanälen,

Fig. 3 ein weiteres Schaumstoffteil mit sehr unregelmäßigem Umriß,

Fig. 4 die Seitenansicht eines Teiles mit einem Sackloch,

Fig. 5 die Seitenansicht eines Teiles mit einem Sackloch und einem hierzu rechtwinklig verlaufenden Durchgangskanal,

Fig. 6 einen Walzenspalt für ein Teil mit einem Querschnitt entsprechend Fig. 1,

Fig. 7 eine Walzenanordnung und

Fig. 8 eine Vorrichtung zum Trocknen eines ovalen Teiles mit zwei Durchgangskanälen.

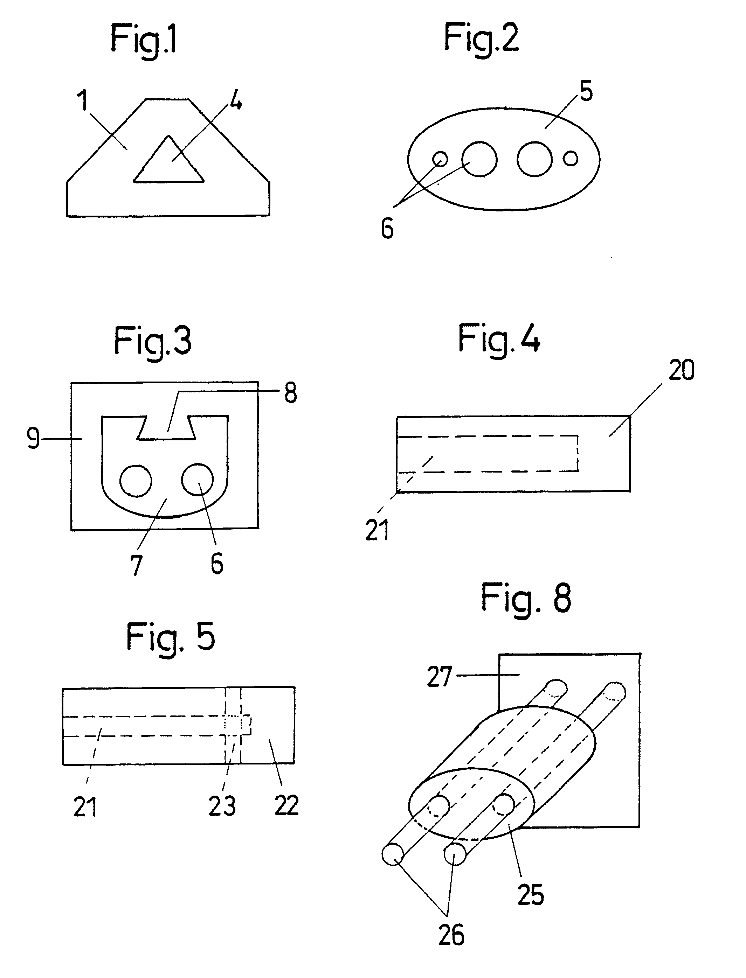

Fig. 1 zeigt ein im wesentlichen dreieckiges Schaumstoffprofil 1, dessen Kanten jedoch geradlinig abgeschnitten sind, so daß ein sechseckiger Umriß entsteht. Etwa in der Mitte dieses Querschnittes befindet sich ein dreieckiger Kanal 4. Ein solches Teil kann eine Länge aufweisen, die größer ist als eines der Maße seines Querschnitts. Teile dieser Art mit einer Länge über 250 mm können ohne Probleme mittels einer Bandsäge oder eines Heizdrahtes aus einer dicken Schaumstoffplatte geschnitten werden.

Fig. 2 zeigt ein Schaumstoffteil 5 mit einem äußeren Umriß in Form eines flachen Ovals und mit vier Durchgangskanälen 6 von kreisrundem Querschnitt.

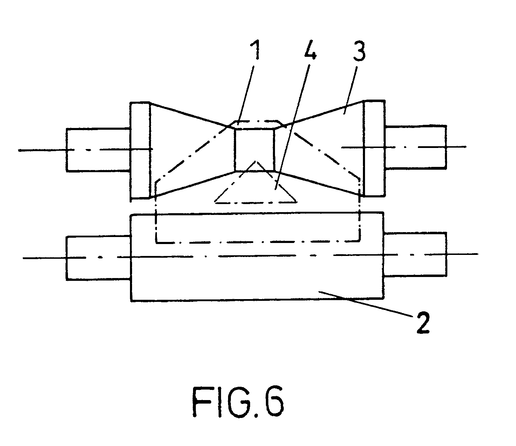

Die Teile mit äußeren Umrissen gemäß Fig. 1 und 2 können mittels wenigstens einer entsprechend profilierten Walze in mindestens dem letzten Walzenspalt bei der Behandlung in einer Walzenanordnung bearbeitet werden (vergl. Fig. 6), wobei die aus den Kanälen 4 bzw. 6 ausgetrennten Teile oder diesen entsprechende Stücke während der Imprägnierung in den Teilen 1 bzw. 5 verbleiben.

Fig. 3 zeigt einen Querschnitt eines Kunststoffteils 7, an dessen Umfang eine schwalbenschwanzförmige Nut 8 vorgesehen ist und das darüber hinaus zwei Durchgangskanäle 6 besitzt. Ein solches Teil wird zweckmäßigerweise mit dem zunächst abgetrennten Umfangselement 9, dessen äußerer Querschnitt rechteckig ist, und mit in die Durchgangskanäle 6 eingesetzten Schaumstoffelementen, die zuvor beim Bohren der Kanäle 6 herausgetrennt wurden, imprägniert. Dabei kann die Füllung des Schaumstoffes und die anschließende Behandlung in den Walzenspalten wie bei einem Teil mit rechteckigen Querschnitt erfolgen. Die heraus- und abgetrennten Schaumstoffelemente werden vor dem Trocknen entfernt.

Fig. 4 zeigt eine Ansicht auf eine Längsseite eines Schaumstoffteils 20 mit einem Sackloch 21, das für die Imprägnierung mit einem entsprechenden Schaumstoffelement ausgefüllt wird.

Fig. 5 zeigt ein Schaumstoffteil 22, das ebenfalls ein Sackloch 21 aufweist, an dessen innerem Ende jedoch zusätzlich ein quer verlaufender Durchgangskanal 23 angeordnet ist. Auch in diesem Falle werden die aus Sackloch und Kanal herausgetrennten Schaumstoffelemente oder ihnen entsprechende Elemente für die Imprägnierung wieder eingeschoben und anschließend entfernt.

Fig. 6 zeigt einen Walzenspalt zwischen einer zylindrischen Walze 2 und einer profilierten Walze 3. Dies kann der letzte von mehreren Walzenspalten sein, in dem ein Schaumstoffteil 1 mit einem in den dreieckigen Kanal 4 eingesetzten Schaumstoffelement, die in strichpunktierten Linien dargestellt sind, behandelt wird.

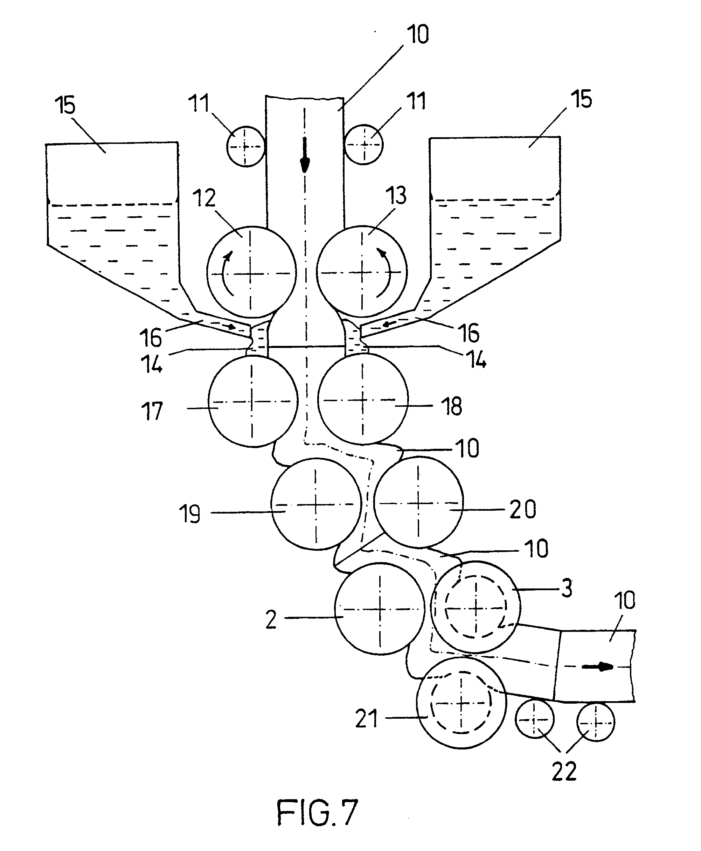

Fig. 7 zeigt ein Ausführungsbeispiel einer Walzenanordnung. Die Schaumstoffteile 10 werden möglichst unmittelbar aneinander anschließend, senkrecht von oben entlang Einrichtungen 11 zur Zuführung in den ersten Walzenspalt der Walzen 12, 13, deren Achse horizontal angeordnet sind, eingeführt. Zwischen diesem Walzenpaar 12, 13 und einem weiter darunter liegenden, ebenfalls horizontal angeordneten Walzenpaar 17, 18 sind Mittel 16 zur Zuführung des Imprägniermittels 14 aus den Vorratsbehältern 15 an die Schaumstoffbahn 10 angeordnet. Die Schaumstoffteile 10 erfahren in den ersten Walzspalt eine Vorkonditionierung, so daß das Imprägniermittel 14 unmittelbar unter den Walzen 12, 13 vom Schaumstoff beim Ausdehnen eingesogen wird. Dafür sollte der Durchmesser der die Vorkonditionierung bewirkenden Walzen 12, 13 klein in Bezug auf den der anderen Walzen sein. Durch die den zweiten Walzenspalt bildenden Walzen 17, 18 wird das Imprägniermittel 14 in die Schaumstoffteile 10 hineingedrückt und beim Durchgang durch weitere in etwa horizontal und vertikal zu durchlaufende Walzspalte 18-19, 19-20, 20-2, 2-3, 3-21, die in kurzen vertikalen Abständen untereinander und seitlich gegeneinander versetzt angeordnet sind, gleichmäßig im Schaumstoff verteilt. Die Walzspalten können in Durchlaufrichtung enger werden, und es ist möglich, das Walzgerüst durch Weglassen von einer oder mehrerer Walzen, z. B. 19 und 20, entsprechend den jeweiligen Anforderungen zu verkürzen oder durch weitere Walzen zu ergänzen.

Anstelle der Walzen 12, 13 können auch andere Zuführungseinrichtungen verwendet werden, so daß in diesem Falle sich der erste Walzenspalt zwischen den Walzen 17, 18 befindet.

Eine Besonderheit stellen die Walzen 3 und 21 dar, die z. B. eine den Schaumstoffteilen der Figuren 1 oder 2 entsprechende Profilierung aufweisen und den über seine Breite eine unterschiedliche Dicke aufweisenden Schaumstoff über seinen gesamten Querschnitt gleichmäßig zusammendrükken. Bei außerordentlich unregelmäßigen Querschnitten können auch weitere Walzen, die vor der Walze 3 liegen, ein Profil aufweisen.

Hinter der Walzenanordnung werden die Schaumstoffteile abgenommen, die abgetrennten aber für die Imprägnierung wieder angebrachten Schaumstoffelemente werden entnommen und die behandelten Schaumstoffteile getrocknet. Die Trocknung erfolgt vorzugsweise auf einem Gestell, durch das die Teile an ihren wesentlichen Flächen unterstützt werden.

Fig. 8 zeigt ein Schaumstoffteil 25 von ovaler äußerer Form mit zwei Durchgangskanälen. Dieses Teil wird auf zwei den Sollmaßen der Durchgangskanäle entsprechende Stangen 26 an einem Gestell 27 nach dem Imprägnieren aufgesteckt. Hierdurch wird sowohl der Abstand zwischen den Durchgangskanälen als auch ein genauer Durchmesser der Kanäle gewährleistet. Falls wegen des Gewichts und der Abmessungen des Teiles 25 die Gefahr besteht, daß das Teil zwischen den Stangen 26 durchhängt, kann auf der unteren Seite des äußeren Umfangs noch ein nicht dargestelltes unterstützendes Blech angebracht werden. Es ist ferner möglich, ein Durchhängen der zu trocknenden Teile durch eine automatische sich langsam drehende Wendevorrichtung zu verhindern, indem die Stangen 26 z. B. als auf einer Platte vor dem Gestell 27 sich drehende Einrichtung ausgeführt sind. Es ist zweckmäßig, die mit dem Schaumstoff in Berührung kommende Teile, wie z. B. die Stangen 26, vor dem Aufsetzen der Teile 25 einzufetten, um zu verhindern, daß die Teile beim Abziehen von den Stangen beschädigt werden. Die Trocknung erfolgt beispielsweise in einem Zeitraum von 24 Stunden bei ca. 60 bis 80 °C. Die trockenen Schaumstoffteile können danach vorsichtig gehandhabt gegebenenfalls weiter bearbeitet und zu den gewünschten porösen keramischen Schaumkörpern gebrannt werden.

**Patentansprüche**

1. Verfahren zur Herstellung eines keramischen Schaumkörpers mit Ausnehmungen oder Durchgangskanälen, wobei ein aus organischem polymerem Kunststoff bestehender Schaumstoff mit einem keramischen Imprägniermittel beschichtet wird, die Verteilung des Imprägniermittels durch Zusammendrücken des imprägnierten Schaumstoffes in mehreren Spalten zwischen je zwei Walzen erfolgt, der Schaumstoffkörper getrocknet und anschließend unter Zersetzung des organischen Kunststoffes zu einer keramischen Schaumstruktur gebrannt wird, dadurch gekennzeichnet, daß vor der Imprägnierung des Schaumstoffes ein Schaumstoffteil mit den Ausnehmungen und/oder Kanälen des herzustellenden Schaumkörpers erzeugt wird, diese Ausnehmungen und Kanäle vorzugsweise wieder mit den abgetrennten Schaumstoffelementen gefüllt, das Schaumstoffteil gemeinsam mit abgetrennten Elementen mit Imprägniermittel beschichtet wird und die Elemente vor dem Trocknen von dem Schaumstoffteil entfernt werden.

2. Verfahren nach Anspruch 1, dadurch gekennzeichnet, daß die in ihren Abmessungen und in ihrer Lage zueinander maßhaltig herzustellenden Flächen insbesondere der Ausnehmungen und Kanäle während des Trocknens abgestützt werden.

3. Verfahren nach Anspruch 1 oder 2, wobei die Benetzung der Schaumstoffteile mit dem Imprägniermittel an einem ersten oder zweiten Spalt zwischen zwei Walzen und die Verteilung des Imprägniermittels in dem Querschnitt des Schaumstoffes in weiteren Walzenspalten erfolgt, dadurch gekennzeichnet, daß das Schaumstoffteil gemeinsam mit den abgetrennten Elementen die Walzenspalte durchläuft.

4. Verfahren nach Anspruch 3, dadurch gekennzeichnet, daß das Schaumstoffteil in dem ersten oder/und zweiten Walzenspalt in der Richtung eingeführt wird, in der sich die wesentlichsten Kanäle und Ausnehmungen erstrecken.

5. Verfahren nach Anspruch 3 oder 4, dadurch gekennzeichnet, daß das Schaumstoffteil in vertikaler Richtung von oben in den ersten oder/und zweiten Walzenspalt eingeführt wird und das Imprägniermittel von beiden Seiten dem Schaumstoff zugeführt und in ihn eingearbeitet wird.

6. Verfahren nach einem oder mehreren der Ansprüche 3 bis 5, dadurch gekennzeichnet, daß ein Schaumstoffteil, das einen über seine Länge gleichen, vom Rechteck abweichenden äußeren Umriß und sich insbesondere in Längsrichtung erstreckende Kanäle aufweist, mit den in die Kanäle eingesetzten, vorher ausgetrennten Elementen in einem letzten Walzenspalt in einer Weise durch wenigstens eine profilierte Walze zusammengedrückt wird, bei der jeder Bereich des durch den Umriß bezeichneten Querschnitts um denselben prozentualen Anteil zusammengedrückt wird.

# Fig.1

# Fig.2

# Fig.3

# Fig.4

# Fig. 5

# Fig. 8

FIG.6

FIG.7